# EUROPEAN PATENT APPLICATION

(11) **EP 4 468 419 A1**
(43) Date of publication of application: **27.11.2024**
(21) Application number: 23760396.4
(22) Date of filing: 23.02.2023
(51) Int. Cl.: H01M 4/62, H01M 4/134, H01M 4/38, H01M 10/052, C01B 32/159

(54) **NEGATIVE ELECTRODE, AND SECONDARY BATTERY COMPRISING NEGATIVE ELECTRODE**

(30) Priority: 23.02.2022 KR 20220023961
(71) Applicant: LG Energy Solution, Ltd., Seoul 07335 (KR)
(72) Inventor: MOON, Il Jae, Daejeon 34122 (KR); PARK, Joo Ho, Daejeon 34122 (KR); KIM, Woo Ha, Daejeon 34122 (KR); YOON, Sung Soo, Daejeon 34122 (KR)
(74) Representative: Hoffmann Eitle
(86) International application number: PCT/KR2023/002598
(87) International publication number: WO 2023/163522

(57) **Abstract**

The present invention discloses a negative electrode and a secondary battery, and the negative electrode includes a negative electrode active material layer including a negative electrode active material and a conductive agent, wherein the negative electrode active material includes a silicon-based negative electrode active material, and the conductive agent includes a carbon nanotube structure in which a plurality of single-walled carbon nanotube units are bonded to each other side by side, wherein the carbon nanotube structure has an average length of 2 µm to 20 µm, and, after 60 carbon nanotube structures are selected from carbon nanotube structures having an average length of 2 um to 20 um which are observed when a surface of the negative electrode active material layer is checked at a magnification of 20,000 through a scanning electron microscope (SEM) and an A value defined by [Equation 1] is measured for each of the selected carbon nanotube structures, an average A value, which is calculated by arithmetic average of remaining 50 A values excluding top 5 A values and bottom 5 A values from the measured A values, is in a range of 70 to 100. A = (straight-line distance (P) between both ends of the carbon nanotube structure/total length (Q) of the carbon nanotube structure) × 100.

## Description

### TECHNICAL FIELD

This application claims priority from Korean Patent Application No. 10-2022-0023961, filed on February 23, 2022, the disclosure of which is incorporated by reference herein.

The present invention relates to a negative electrode and a secondary battery including the negative electrode, and more particularly, to a negative electrode, in which a conductive network may be effectively maintained during battery operation, and a secondary battery including the same.

### BACKGROUND ART

Demand for batteries as an energy source has been significantly increased as technology development and demand with respect to mobile devices have recently increased, and a variety of researches on batteries capable of meeting various needs have been carried out accordingly. Particularly, as a power source for such devices, research into lithium secondary batteries having excellent lifetime and cycle characteristics as well as high energy density has been actively conducted.

A lithium secondary battery is a battery which includes a positive electrode active material capable of intercalating/deintercalating lithium ions, a negative electrode including a negative electrode active material capable of intercalating/deintercalating the lithium ions, an electrode assembly having a microporous separator disposed between the positive electrode and the negative electrode, and a non-aqueous electrolyte containing the lithium ions.

Development of lithium secondary batteries using a silicon-based active material is recently in progress in order to improve capacity of the negative electrode. However, since the silicon-based active material undergoes a significant volume change during battery operation, a conductive network in the negative electrode is reduced by continuous operation of the battery, and accordingly, there is a problem in that life characteristics of the battery are degraded.

In order to solve this problem, conventionally, efforts have been made to improve conductivity of the negative electrode using the silicon-based active material by forming a carbon coating layer on the silicon-based active material or using multi-walled carbon nanotubes as a conductive agent. However, when using the above method, a short conductive network may be improved, but a long conductive network is not maintained during battery operation. Thus, attempts have recently been made to form a long conductive network by using long single-walled carbon nanotubes together with the silicon-based active material as a conductive agent.

However, since the single-walled carbon nanotubes are entangled with each other or excessively bent in the prepared negative electrode, there is a problem in that the desired long conductive network is not easily formed. In order to solve this problem, attempts have been made to adjust a diameter of the single-walled carbon nanotube or to disperse the single-walled carbon nanotubes in the negative electrode by dry grinding the single-walled carbon nanotubes, but the above-described problem has not been solved even if such techniques are used.

Therefore, there is a need for a negative electrode in which single-walled carbon nanotubes smoothly form a long conductive network.

### DISCLOSURE OF THE INVENTION

### TECHNICAL PROBLEM

An aspect of the present invention provides a negative electrode in which a conductive network may be effectively maintained even during battery operation.

Another aspect of the present invention provides a secondary battery including the negative electrode and having improved life characteristics.

### TECHNICAL SOLUTION

According to an aspect of the present invention, there is provided a negative electrode including a negative electrode active material layer that includes a negative electrode active material and a conductive agent, wherein the negative electrode active material includes a silicon-based negative electrode active material, and the conductive agent includes a carbon nanotube structure in which a plurality of single-walled carbon nanotube units are bonded to each other side by side, wherein the carbon nanotube structure has an average length of 2 um to 20 um, and, after 60 carbon nanotube structures are selected from carbon nanotube structures having an average length of 2 um to 20 um which are observed when a surface of the negative electrode active material layer is checked at a magnification of 20,000 through a scanning electron microscope (SEM) and an A value defined by [Equation 1] is measured for each of the selected carbon nanotube structures, an average A value, which is calculated by arithmetic average of remaining 50 A values excluding top 5 A values and bottom 5 A values from the measured A values, is in a range of 70 to 100. A = {straight-line distance (P) between both ends of the carbon nanotube structure/total length (Q) of the carbon nanotube structure} × 100

The expression "average" in the present specification means an arithmetic average.

According to another aspect of the present invention, there is provided a secondary battery including the negative electrode.

### ADVANTAGEOUS EFFECTS

In a case in which a negative electrode includes carbon nanotube structures satisfying a specific average A value as in the present invention, since the carbon nanotube structure having a specific length may be present in an elongated form in a negative electrode active material layer, a conductive network of the negative electrode may be effectively maintained despite a rapid change in volume of a silicon-based active material during battery operation, and, accordingly, life characteristics of the battery may be improved.

### BRIEF DESCRIPTION OF THE DRAWINGS

FIG. 1 is a schematic diagram for explaining an A value of the present invention.
FIGS. 2 through 5 are scanning electron microscope (SEM) images of a negative electrode prepared by Example 1 of the present invention.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II by BEL Japan Inc.

The expression "average particle diameter (D₅₀)" in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to a few mm and may obtain highly repeatable and high-resolution results.

An A value in the present specification is an index indicating a degree of aggregation of carbon nanotube structures in a negative electrode active material layer, wherein it is a value defined by Equation 1 below. A = (straight-line distance (P) between both ends of the carbon nanotube structure/total length (Q) of the carbon nanotube structure) × 100

In the present invention, after 60 carbon nanotube structures are selected from carbon nanotube structures having an average length of 2 um to 20 um which are observed when a surface of the negative electrode active material layer is checked at a magnification of 20,000 through a scanning electron microscope (SEM) and the A value defined by [Equation 1] is measured for each of the selected carbon nanotube structures, an average A value means a value which is calculated by arithmetic average of remaining 50 A values excluding top 5 A values and bottom 5 A values from the measured A values. In this case, the straight-line distance P between both ends of the carbon nanotube structure and the total length Q of the carbon nanotube structure in [Equation 1] may be measured through SEM image analysis.

I_{G}/I_{D} in the present specification means a ratio of a maximum peak intensity (I_{G}) of a G band at 1580±50 cm⁻¹ to a maximum peak intensity (I_{D}) of a D band at 1360±50 cm⁻¹ which are obtained by Raman spectroscopy using a laser with a wavelength of 532 nm by using a Raman spectrometer (DXR3xi by Thermo Fisher Scientific Inc.).

Hereinafter, the present invention will be described in detail.

### Negative Electrode

A negative electrode according to the present invention includes a negative electrode active material layer including a negative electrode active material and a conductive agent, wherein the negative electrode active material includes a silicon-based negative electrode active material, and the conductive agent includes carbon nanotube structures in which a plurality of single-walled carbon nanotube units are bonded to each other side by side, wherein the carbon nanotube structures have an average length of 2 um to 20 µm, and an average A value measured by observing a surface of the negative electrode active material layer with a scanning electron microscope may be in a range of 70 to 100, preferably, 90 to 100. In a case in which the average A value satisfies the above numerical range, since there is little entanglement or bending of the carbon nanotube structures present in the negative electrode active material layer, a long conductive network may be formed, and, accordingly, the conductive network may be maintained without being broken even if volume expansion of the silicon-based negative electrode active material occurs during battery operation.

After 60 carbon nanotube structures are selected from carbon nanotube structures having an average length of 2 um to 20 um which are observed when the surface of the negative electrode active material layer is checked at a magnification of 20,000 through a scanning electron microscope (SEM) and an A value defined by [Equation 1] below is measured for each of the selected carbon nanotube structures, the average A value is a value which is calculated by arithmetic average of remaining 50 A values excluding top 5 A values and bottom 5 A values from the measured A values. A = {straight-line distance (P) between both ends of the carbon nanotube structure/total length (Q) of the carbon nanotube structure} × 100

The A value is an index indicating a degree of entanglement of the carbon nanotube structures included in the negative electrode active material, wherein the closer the A value is to 100, the less the entanglement or bending of the carbon nanotube structures is.

With respect to a conventional negative electrode using a silicon-based negative electrode active material and using carbon nanotubes as a conductive agent, it is common for the carbon nanotubes to exist in a twisted or entangled form in a negative electrode active material layer. In a case in which the carbon nanotubes exist in a twisted or entangled form in the negative electrode active material layer, since a length of the conductive agent is shortened, it is difficult to form a long conductive network in the negative electrode active material layer and only a short conductive network is formed. Thus, it is difficult to maintain the conductive network in the negative electrode active material layer due to an excessive volume change of the silicon-based negative electrode active material during battery operation, and there is a problem in that the conductive network is easily disconnected.

In contrast, since the negative electrode using the silicon-based negative electrode active material according to the present invention uses the carbon nanotube structures having a specific length as a conductive agent and the average A value, which is an index indicating a degree of entanglement of the carbon nanotube structures, is large, in a range of 70 to 100, the carbon nanotube structure may exist in an elongated form in the negative electrode active material layer, and, as a result, disconnection of the conductive network in the negative electrode active material layer is minimized even if there is an excessive volume change of the silicon-based negative electrode active material during battery operation and an effect of improving conductivity according to the long conductive network may be maintained.

The negative electrode may include a negative electrode active material layer, and specifically, the negative electrode may include a current collector and a negative electrode active material layer disposed on the current collector. However, the negative electrode does not exclude a so-called "free-standing negative electrode" in which the negative electrode is composed only of a negative electrode active material layer without a current collector.

The current collector is not particularly limited so long as it has conductivity without causing adverse chemical changes in a battery. For example, copper, stainless steel, aluminum, nickel, titanium, fired carbon, aluminum or stainless steel that is surface-treated with one of carbon, nickel, titanium, silver, or the like may be used as the current collector. Specifically, a transition metal that absorbs carbon well, such as copper and nickel, may be used as the current collector.

The negative electrode active material layer may be disposed on one surface or both surfaces of the current collector. Of course, with respect to the free-standing negative electrode, the negative electrode active material layer may become a negative electrode by itself without the current collector.

The negative electrode active material layer may include a negative electrode active material, a binder, and a conductive agent.

### (1) Negative Electrode Active Material

The negative electrode active material may include a silicon-based negative electrode active material. Since the silicon-based negative electrode active material has large theoretical capacity, the negative electrode may have high capacity when the silicon-based negative electrode active material is used.

Preferably, the silicon-based negative electrode active material may include silicon particles. The silicon particles may be silicon particles (particles formed of silicon), so-called Pure Silicon. The silicon particle has an advantage of effectively improving the capacity of the negative electrode, but a volume of the silicon particle is rapidly changed during charge and discharge of the battery, and, as a result, the conductive network may be disconnected to degrade life characteristics of the negative electrode. However, in a case in which the average A value of the carbon nanotube structures in the negative electrode active material layer satisfies a specific range as in the present invention, a long conductive network may be formed in the negative electrode active material layer, and, accordingly, since the conductive network in the negative electrode active material layer may be effectively maintained even when the volume of the silicon particle expands due to battery operation, life characteristics of the battery may be improved.

An average particle diameter D₅₀ of the silicon particles may be in a range of 1 um to 15 um, particularly 2 um to 12 µm, and more particularly 3 um to 10 um. When the above range is satisfied, conductive connection of the silicon particles by the carbon nanotube structure may be effective.

A specific surface area of the silicon particles may be in a range of 0.5 m²/g to 5.0 m²/g, particularly 0.7 m²/g to 4.0 m²/g, and more particularly 1.0 m²/g to 2.5 m²/g. When the above range is satisfied, the conductive connection of the silicon particles by the carbon nanotube structure may be effective while an electrolyte solution side reaction is minimized.

The silicon particles may be included in an amount of 2 wt% to 95 wt%, particularly 3 wt% to 93 wt%, and more particularly 5 wt% to 90 wt% in the negative electrode active material layer. When the above range is satisfied, the capacity of the negative electrode may be effectively improved.

The negative electrode active material may be formed of silicon particles. In this case, the silicon particles may be included in an amount of 70 wt% to 99 wt%, specifically, 80 wt% to 97 wt% in the negative electrode active material layer. When the above range is satisfied, capacity of the battery may be effectively improved.

Alternatively, the negative electrode active material may further include a carbon-based negative electrode active material. The carbon-based negative electrode active material may include graphite. The graphite may include at least one of artificial graphite and natural graphite.

### (2) Conductive Agent

The conductive agent may include a carbon nanotube structure. The carbon nanotube structure may include a plurality of single-walled carbon nanotube units. Specifically, the carbon nanotube structure may be one in which a plurality of single-walled carbon nanotube units are bonded to each other side by side. For example, the carbon nanotube structure may be formed into a flexible cylindrical or rope-shaped structure in which the single-walled carbon nanotube units are arranged side by side and bonded to each other such that long axes of the units are parallel to each other. The carbon nanotube structures are interconnected in the negative electrode active material layer to form a network structure.

The carbon nanotube structure may be one in which the plurality of single-walled carbon nanotube units are bonded to each other side by side, and may specifically be a carbon nanotube structure in which 2 to 5,000 single-walled carbon nanotube units are bonded to each other side by side, and, more specifically, the carbon nanotube structure may be a carbon nanotube structure in which 2 to 4,500 single-walled carbon nanotube units are bonded to each other. For example, in consideration of dispersibility of the carbon nanotube structure and durability of the negative electrode, the carbon nanotube structure is most preferably a carbon nanotube structure in which 2 to 50 single-walled carbon nanotube units are bonded to each other.

Conventional electrodes including carbon nanotubes are generally prepared by dispersing bundle type or entangled type carbon nanotubes (form in which single-walled carbon nanotube units or multi-walled carbon nanotube units are attached to each other or intertwined) in a dispersion medium to prepare a conductive agent dispersion and then using the conductive agent dispersion. In this case, the carbon nanotubes are completely dispersed in the conventional conductive agent dispersion to exist as a conductive agent dispersion in which carbon nanotube units in the form of a single strand are dispersed. In the conventional conductive agent dispersion, the carbon nanotube units are easily cut by an excessive dispersion process so that the carbon nanotube units have a length shorter than an initial length. Also, the carbon nanotube units may also be easily cut in a rolling process of the negative electrode, and an additional limitation occurs in which the carbon nanotube units (particularly, single-walled carbon nanotube units) are cut by an excessive volume change of the negative electrode active material during operation of the battery. Accordingly, conductivity of the negative electrode may be reduced to degrade the life characteristics of the battery. Furthermore, with respect to the multi-walled carbon nanotube unit, structural defects are high due to a mechanism of node growth (not a smooth linear shape, but nodes are present due to defects generated during a growth process). Thus, during the dispersion process, the multi-walled carbon nanotube units are more easily cut, and the short-cut multi-walled carbon nanotube units are likely to be aggregated with each other via π-π stacking of carbons of the unit. Accordingly, it is difficult for the multi-walled carbon nanotube units to be more uniformly dispersed and present in a negative electrode slurry.

Alternatively, with respect to the carbon nanotube structure included in the negative electrode of the present invention, since the carbon nanotube structure is in the form of a rope in which a plurality of single-walled carbon nanotube units are bonded to each other side by side, the single-walled carbon nanotube units may not be cut even with excessive changes in the volume of the negative electrode active material and their length may be smoothly maintained. Also, since the carbon nanotube structures may be interconnected to have a network structure in the electrode, crack generation may be prevented by suppressing the excessive changes in the volume of the negative electrode active material and a strong conductive network may be secured at the same time. Furthermore, since the carbon nanotube structure is not easily broken and may maintain its long shape, the conductive network may be strengthened over the entire negative electrode active material layer. Also, negative electrode adhesion may be significantly improved by inhibiting exfoliation of the negative electrode active material.

The carbon nanotube structure may have an average length of 2 um to 20 µm, particularly 3 um to 15 µm, and more particularly 4 um to 9 µm, for example, 5.5 um to 8.5 um. In a case in which the average length of the carbon nanotube structure is less than 2 µm, since the conductive network structure may not be effectively formed in the negative electrode, negative electrode resistance is increased, and the conductive network is easily disconnected during battery operation to degrade the life characteristics of the battery. In contrast, in a case in which the average length of the carbon nanotube structure is greater than 20 um, since the number of carbon nanotube structures is decreased when the same amount of the carbon nanotube structure is used, it is difficult to form a wide and uniform network in the negative electrode. Accordingly, the negative electrode adhesion is reduced, and there is a problem in that uniformity of the negative electrode adhesion and resistance is reduced. When the prepared electrode is observed by a scanning electron microscope (SEM), the average length means an average value of lengths of remaining 50 carbon nanotube structures excluding top 5 carbon nanotube structures having a large length and bottom 5 carbon nanotube structures from 60 carbon nanotube structures which are observed when the surface of the negative electrode active material layer is checked at a magnification of 20,000 through the SEM.

The carbon nanotube structure may have an average diameter of 10 nm to 100 nm, particularly 10 nm to 60 nm, and more particularly 15 nm to 45 nm, for example, 15 nm to 28 nm. In a case in which the average diameter of the carbon nanotube structure satisfies the above range, the conductive network is effectively formed to improve the negative electrode adhesion, and there is an effect of reducing the negative electrode resistance and battery resistance. When the prepared electrode is observed by an SEM, the average diameter means an average value of diameters of remaining 50 carbon nanotube structures excluding top 5 carbon nanotube structures having a large diameter and bottom 5 carbon nanotube structures from 60 carbon nanotube structures which are observed when the surface of the negative electrode active material layer is checked at a magnification of 20,000 through the SEM.

The single-walled carbon nanotube unit may have an I_{G}/I_{D} of 30 to 200, particularly 40 to 180, and more particularly 50 to 170, for example, 110 to 150, during Raman spectrum measurement. When the above range is satisfied, since a degree of graphitization of the single-walled carbon nanotube unit may be at an appropriate level, conductivity and dispersibility of the carbon nanotube structure may be improved, and, since the carbon nanotube structure may exist in an elongated form in the negative electrode active material layer, the life characteristics of the battery may be improved. In other words, in order for the carbon nanotube structure to satisfy the average A value for improving the life characteristics of the battery, the range of the I_{G}/I_{D} needs to be satisfied.

The average A value of the carbon nanotube structures in the negative electrode active material layer may be in a range of 70 to 100, particularly 75 to 100, and more particularly 80 to 100, for example, 90 to 100. After 60 carbon nanotube structures are selected from carbon nanotube structures having an average length of 2 um to 20 um which are observed when the surface of the negative electrode active material layer is checked at a magnification of 20,000 through an SEM and an A value according to [Equation 1] below is measured, the average A value is a value calculated by arithmetic average of remaining 50 A values excluding top 5 A values and bottom 5 A values from the measured A values. A = (straight-line distance (P) between both ends of the carbon nanotube structure/total length (Q) of the carbon nanotube structure) × 100

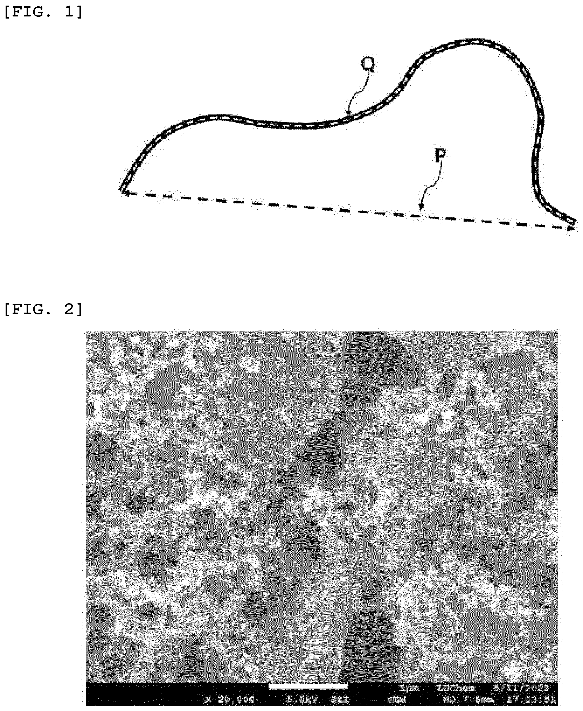

The A value will be described with reference to FIG. 1 as follows. In FIG. 1, the length P means a straight-line distance between both ends of the carbon nanotube structure (indicated by a solid black line). The length Q (white dotted line) is a total length of the carbon nanotube, wherein it means an actual length. Thus, if the carbon nanotube structure is in the form of a perfect straight line, the A value is 100, and it may be understood that, as the A value is closer to 100, the carbon nanotube structure is in an elongated form that becomes closer to a straight line.

In a case in which the average A value of the carbon nanotube structure is less than 70, it means that a plurality of carbon nanotube structures exist in a highly bent form in the negative electrode active material layer. Thus, since it is difficult to form a long conductive network by the carbon nanotube structure, the conductive network may be disconnected or deformed due to repeated volume changes of the silicon-based negative electrode active material, and thus, the life characteristics of the battery may be degraded.

In contrast, in the negative electrode of the present invention, the carbon nanotube structure has an average A value of 70 to 10, and it means that the carbon nanotube structure has an elongated form in the negative electrode active material layer. Thus, since a long conductive network may be formed in the negative electrode active material layer by the carbon nanotube structure, the conductive network may not be disconnected or deformed due to the repeated volume changes of the silicon-based negative electrode active material. Accordingly, the life characteristics of the battery may be improved.

The carbon nanotube structure is formed from bundle type single-walled carbon nanotubes. However, a simple usage of the bundle type single-walled carbon nanotubes does not mean that the above average A value is derived. Great efforts are required, for example, the carbon nanotube structure is in a form in which the single-walled carbon nanotube units having a specific I_{G}/I_{D} are bonded, the carbon nanotube structure must have appropriate length and diameter by controlling conditions during preparation of a conductive agent dispersion in which the carbon nanotube structures are dispersed, and mixing conditions are adjusted during preparation of the negative electrode slurry.

The carbon nanotube structure may be included in an amount of 0.01 wt% to 5 wt%, particularly 0.02 wt% to 3 wt%, and more particularly 0.05 wt% to 1 wt% in the negative electrode active material layer. When the above range is satisfied, since a conductive path of the negative electrode may be secured, the life characteristics of the battery may be improved while a low level of the electrode resistance is maintained.

In some cases, the single-walled carbon nanotube unit may be surface-treated by an oxidation treatment or nitridation treatment to improve affinity with a dispersant.

### (3) Binder

The binder is for securing adhesion between the negative electrode active materials or adhesion of the negative electrode active material to the current collector, wherein common binders used in the art may be used, and types thereof are not particularly limited. The binder, for example, may include a polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, carboxymethyl cellulose (CMC), a styrenebutadiene rubber (SBR), a fluoro rubber, or various copolymers thereof, and any one thereof or a mixture of two or more thereof may be used.

The binder may be included in an amount of 0.5 wt% to 15 wt% based on a total weight of the electrode active material layer, and may be specifically included in amount of 1 wt% to 12 wt%. In a case in which the amount of the binder satisfies the above range, excellent negative electrode adhesion may be achieved while an increase in the negative electrode resistance is minimized.

### (4) Dispersant

The negative electrode active material layer may further include a dispersant. The dispersant allows the carbon nanotube structures to be uniformly dispersed and present in the negative electrode active material layer.

The dispersant may include a polymer dispersant containing an amine and a phenolic compound containing two or more aromatic rings, and may specifically be composed of a polymer dispersant containing an amine and a phenolic compound containing two or more aromatic rings. In a case in which the two kinds of dispersants are used, since the carbon nanotube structures are effectively dispersed and present in the negative electrode and may form a long network, the life characteristics of the battery may be improved.

Specifically, the carbon nanotube structure is present in a conductive agent dispersion, and a negative electrode slurry is formed through the conductive agent dispersion, wherein the two kinds of dispersants form carbon nanotube structures having an appropriate diameter and an appropriate length in the conductive agent dispersion and may also play a role in suppressing re-aggregation of the carbon nanotube structures during the preparation of the negative electrode slurry. Accordingly, the carbon nanotube structures are evenly dispersed in the negative electrode slurry to form an effective network and simultaneously increase zero-shear viscosity of the negative electrode slurry. Thus, binder migration may be suppressed by the network caused by the carbon nanotube structures. Also, even if the negative electrode slurry is coated on the current collector, the binder migration in the negative electrode slurry may be further suppressed by the zero-shear viscosity. As a result, a sufficient amount of the binder may be present in a lower portion of the negative electrode active material layer. Therefore, since the negative electrode adhesion may be improved, life performance of the battery may be further improved. Furthermore, since the negative electrode adhesion is not reduced even if coating speed of the negative electrode active material layer is increased, productivity of the negative electrode may be improved.

The polymer dispersant containing an amine, for example, may be at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyldimethylammonium chloride, and polyethylenimine. In a case in which the specific polymer dispersant, in which an amine is contained in a polymer structure, is used as described above, the carbon nanotube structures may be effectively dispersed in the negative electrode. More specifically, the polymer dispersant containing an amine may be polyvinylpyrrolidone.

Next, the phenolic compound containing two or more aromatic rings may reduce viscosity of the conductive agent dispersion (carbon nanotube structure dispersion), particularly a water-based conductive agent dispersion and may significantly improve an increase in viscosity over time due to a bulky structure generated by the two or more aromatic rings and an influence of a hydroxy group included in a phenolic group. In a case in which phenolic compounds containing only one aromatic ring (for example, dopamine, gallic acid, pyrogallol, catechol, etc.) were used, an effect of improving the viscosity of the dispersion and an effect of suppressing a change in viscosity over time were not sufficient.

Preferably, the phenolic compound may include at least one structure selected from the group consisting of a phenolic structure, a catechol structure, a gallol structure, and a naphthol structure in at least one of the aromatic rings, and may specifically include at least one structure selected from the group consisting of a catechol structure and a gallol structure in at least one of the aromatic rings. The phenolic structure is a structure in which one hydroxy group is bonded to a benzene ring, the catechol structure is a structure in which two hydroxy groups are bonded to a benzene ring, the gallol structure is a structure in which three hydroxy groups are bonded to a benzene ring, and the naphthol structure is a structure in which one hydroxy group is bonded to naphthalene.

In a case in which the phenolic compound containing two or more aromatic rings includes the above structure, since an interaction between the aromatic ring and the carbon nanotube and an interaction by hydrogen bonding between -OH of the phenolic compound and the polymer dispersant are properly balanced in the carbon nanotube dispersion, effects of reducing the viscosity of the conductive agent dispersion and suppressing the increase in viscosity over time may be exhibited.

Specific examples of the phenolic compound containing two or more aromatic rings may be at least one selected from the group consisting of baicalin, luteolin, taxifolin, myricetin, quercetin, rutin, catechin, epigallocatechin gallate, butein, piceatannol, and tannic acid, and may preferably be tannic acid, quercetin, epigallocatechin gallate, or a combination thereof.

In an example of the present invention, the aromatic ring contained in the phenolic compound containing two or more aromatic rings may have a structure in which one aromatic ring, which is not fused with another aromatic ring, or two aromatic rings are fused to each other, and a structure, in which three or more aromatic rings are fused to each other, may not be included.

That is, the inclusion of a structure in which three or more aromatic rings are fused in a molecular structure may be excluded from a range of the phenolic compound containing two or more aromatic rings.

In a case in which the phenolic compound containing two or more aromatic rings includes the structure in which three or more aromatic rings are fused in the molecular structure, since the structure in which the three or more aromatic rings are fused may induce agglomeration between the carbon nanotubes by exerting a more than adequate strong binding force with the carbon nanotubes in the conductive agent dispersion, it may not be suitable for improving dispersibility of the carbon nanotubes. Also, since the balance between the interaction between the aromatic ring and the carbon nanotube and the interaction by the hydrogen bonding between -OH of the phenolic compound and the polymer dispersant in the conductive agent dispersion is broken, it may be difficult to properly exhibit the effect of reducing the viscosity of the conductive agent dispersion and the effect of suppressing the increase in viscosity over time.

Specifically, the phenolic compound containing two or more aromatic rings may be tannic acid. In this case, the bundle type carbon nanotubes may be smoothly dispersed during the preparation of the conductive agent dispersion.

A weight ratio of the polymer dispersant containing an amine to the phenolic compound containing two or more aromatic rings may be in a range of 5:1 to 1:1, particularly 4:1 to 2:1, and more particularly 3.5:1 to 2.5:1. When the above range is satisfied, the dispersibility of the carbon nanotube structure is improved, and there is an effect of reducing the viscosity of the conductive agent dispersion.

The dispersant may include polyvinylpyrrolidone, as the polymer dispersing agent containing an amine, and tannic acid as the phenolic compound containing two or more aromatic rings. In a case in which the polyvinylpyrrolidone is used in combination with the tannic acid, the dispersibility and dispersion stability of the carbon nanotube structure and effects of reducing the viscosity of the carbon nanotube structure may be simultaneously obtained.

The dispersant may be included in an amount of 0.005 wt% to 0.5 wt% in the negative electrode active material layer, and may be specifically included in an amount of 0.02 wt% to 0.3 wt%. In a case in which the above range is satisfied, the carbon nanotube structure may be smoothly dispersed so that the conductive network may be smoothly developed, and the negative electrode adhesion and cell life performance may be improved because the binder migration may be suppressed.

The dispersant may be included in an amount of 50 parts by weight to 200 parts by weight based on 100 parts by weight of the carbon nanotube structure in the negative electrode, and may be specifically included in an amount of 80 parts by weight to 170 parts by weight. When the above range is satisfied, the dispersibility of the carbon nanotube structure may be improved, the viscosity of the dispersion may be reduced, and the change over time may be improved.

### Method of Preparing Negative Electrode

Next, a method of preparing the negative electrode of the present invention will be described.

The method of preparing the negative electrode of the present invention may include the steps of: preparing a conductive agent dispersion and a negative electrode active material dispersion (S1); and forming a negative electrode slurry composition by mixing the conductive agent dispersion and the negative electrode active material dispersion and stirring the mixture (S2). The negative electrode is the same as the negative electrode of the above-described embodiment. Specifically, the negative electrode active material (silicon-based negative electrode active material, etc.) and the conductive agent (carbon nanotube structure, Equation 1, etc.) are the same as the negative electrode active material and conductive agent of the above-described embodiment.

### (1) Preparing of the Conductive Agent Dispersion and the Negative Electrode Active Material Dispersion (S1)

### 1) Preparation of the Conductive Agent Dispersion

In the preparing of the conductive agent dispersion (S1), the conductive agent dispersion may be prepared by including the steps of: preparing a mixed solution containing a dispersion medium, a dispersant, and bundle type single-walled carbon nanotubes (S1-1); and forming a carbon nanotube structure, in which a plurality of single-walled carbon nanotube units are bonded side by side, by dispersing the bundle type single-walled carbon nanotubes by applying a shear force to the mixed solution through a high-pressure homogenizer (S1-2).

In step S1-1, the mixed solution may be prepared by adding bundle type single-walled carbon nanotubes and a dispersant to a dispersion medium. The bundle type single-walled carbon nanotubes are present in the form of a bundle in which the above-described single-walled carbon nanotube units are bonded, wherein the bundle type carbon nanotube, for example, includes 5,000 or more single-walled carbon nanotube units.

During Raman spectrum measurement of the single-walled carbon nanotube units in the bundle type carbon nanotubes, the I_{G}/I_{D} of the single-walled carbon nanotube units may be in a range of 30 to 200, particularly 40 to 180, and more particularly 50 to 170. When the above range is satisfied, one factor that the carbon nanotube structure may exist in a form satisfying Equation 1, that is, in an elongated form may be satisfied. Accordingly, the life characteristics of the battery may be improved. In other words, in order for the carbon nanotube structure to satisfy the average A value for improving the life characteristics of the battery, the range of the I_{G}/I_{D} needs to be satisfied.

The bundle type single-walled carbon nanotubes may be included in an amount of 0.01 wt% to 0.1 wt% in the mixed solution. When the above range is satisfied, since the bundle type single-walled carbon nanotubes are dispersed in an appropriate level, a carbon nanotube structure with appropriate diameter and length may be formed, and dispersion stability may be improved.

The dispersion medium, for example, may include water (H₂O), an amide-based polar organic solvent such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. Specifically, the dispersion medium may be N-methylpyrrolidone (NMP).

The dispersant is the same as the dispersant of the above-described embodiment, and thus, the same description will be omitted. As the dispersant is used, dispersibility of the carbon nanotube structure may be improved, viscosity of the dispersion for preparing the negative electrode slurry may be reduced, and the dispersion stability may be improved.

A weight ratio of the bundle type carbon nanotubes to the dispersant in the conductive agent dispersion may be in a range of 1:0.1 to 1:10, specifically, 1:1 to 1:10. In a case in which the above range is satisfied, since the bundle type single-walled carbon nanotubes are dispersed in an appropriate level, a carbon nanotube structure may be formed at an appropriate level and the dispersion stability may be improved.

A solid content in the mixed solution may be in a range of 0.1 wt% to 20 wt%, specifically, 1 wt% to 10 wt%. In a case in which the above range is satisfied, since the bundle type single-walled carbon nanotubes are dispersed in an appropriate level, a carbon nanotube structure may be formed at an appropriate level and the dispersion stability may be improved. Also, the negative electrode slurry may have viscosity and elasticity suitable for an electrode preparation process, and it also contributes to increase a solid content of the negative electrode slurry.

In step S1-2, the mixed solution may be stirred through a high-pressure homogenizer, and the bundle type single-walled carbon nanotubes may be dispersed in this process to form a carbon nanotube structure. The carbon nanotube structure is one in which a plurality of single-walled carbon nanotube units are bonded side by side, wherein it is the same as the carbon nanotube structure described in relation to the negative electrode of the above-described embodiment.

The high-pressure homogenizer may include a primary nozzle and a secondary nozzle. The mixed solution sequentially passes through the primary nozzle and the secondary nozzle while a pressure is applied to the mixed solution. Since a diameter of the secondary nozzle is smaller than a diameter of the primary nozzle, the mixed solution receives a shear force while passing through the nozzles, and, in this case, the bundle type single-walled carbon nanotubes are dispersed.

The primary nozzle may have a diameter of 100 mm to 500 mm, particularly 150 mm to 300 mm, and more particularly 150 nm to 250 mm. The secondary nozzle may have a diameter of 100 um to 1,000 um, particularly 200 um to 800 um, and more particularly 200 um to 650 um. Also, the pressure may be in a range of 500 Bar to 1,800 Bar, may be specifically in a range of 5,000 Bar to 1,600 Bar, and may be more specifically in a range of 800 Bar to 1,600 Bar. If the pressure is 1,800 Bar or more, since the bundle type single-walled carbon nanotubes are completely dispersed, the carbon nanotube structure may not be smoothly formed. In a case in which the above conditions are satisfied, since the average diameter and average length of the carbon nanotube structure may be at an appropriate level, one factor that the carbon nanotube structure may exist in a form satisfying Equation 1, that is, in an elongated form may be satisfied.

The passing of the mixed solution through the high-pressure homogenizer may be performed 5 times to 10 times, and, accordingly, a diameter of the carbon nanotube structure may be in a range of 1 nm to 30 nm.

In step S1, different from a conventional method of completely dispersing the bundle type single-walled carbon nanotubes, the bundle type single-walled carbon nanotubes are not completely dispersed, but are dispersed to an appropriate level by appropriately combining conditions such as conditions (nozzle size, pressure, etc.) of the high-pressure homogenizer used, physical properties of the bundle type single-walled carbon nanotubes used, and the dispersant used. In the conductive agent dispersion thus formed, there is little or no single-walled carbon nanotube units independently present in the form of a single strand, and most of them may exist as the above-described carbon nanotube structure.

### 2) Preparation of the Negative Electrode Active Material Dispersion

The preparation of the negative electrode active material dispersion may include adding the negative electrode active material (same as the description of the negative electrode active material of the above-described embodiment) to a solvent and stirring.

The solvent may include water (H₂O), an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. Specifically, the solvent may be N-methylpyrrolidone (NMP) .

In the negative electrode active material dispersion, the negative electrode active material may be included in an amount of 50 parts by weight to 100 parts by weight, particularly 60 parts by weight to 100 parts by weight, and more particularly 70 parts by weight to 100 parts by weight based on 100 parts by weight of the solvent.

When preparing the negative electrode active material dispersion, a thickener may be further added in addition to the negative electrode active material. The thickener allows the negative electrode active material dispersion to have a kind of paste form by increasing viscosity of the negative electrode active material dispersion. Accordingly, when the negative electrode active material dispersion is mixed through equipment, a higher shear force may be transmitted to the negative electrode active material dispersion. Thus, the negative electrode active material may be more effectively dispersed in the negative electrode active material dispersion, and the carbon nanotube structure may exist in an elongated form when the negative electrode active material dispersion and the conductive agent dispersion are subsequently mixed.

The thickener may be at least one of carboxymethyl cellulose and carbon nanofibers.

### (2) Forming of the Negative Electrode Slurry Composition by Mixing the Conductive Agent Dispersion and the Negative Electrode Active Material Dispersion and Stirring the Mixture (S2)

The conductive agent dispersion and the negative electrode active material dispersion may be mixed and stirred to form a negative electrode slurry composition.

In a conventional process of preparing a negative electrode slurry composition, the negative electrode active material is added in the form of powder to the conductive agent dispersion. Since the negative electrode active material in the form of powder is difficult to receive a sufficient shear force in a step of being mixed with the conductive agent dispersion, dispersion of the negative electrode active material may not be effectively achieved. Also, since this phenomenon prevents carbon nanotube structures from being uniformly mixed with the negative electrode active material, the carbon nanotube structures become entangled with each other, and thus, the carbon nanotube structure is difficult to have an elongated form in the negative electrode, and is generally highly bent or has a form surrounding the negative electrode active material. Therefore, it is difficult for the above-described average A value to satisfy 70 to 100.

In contrast, during the preparation of the negative electrode of the present invention, the negative electrode active material dispersion is used instead of the negative electrode active material powder. Accordingly, since uniform mixing between the negative electrode active material and the carbon nanotube structures may be possible, entanglement of the carbon nanotube structures is minimized, and thus, one factor that the carbon nanotube structures may satisfy the average A value may be satisfied.

Also, the negative electrode slurry composition may further include a binder and a solvent, if necessary. In this case, the binder of the above-described embodiment may be used as the binder. The solvent, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. The solvent may be the same or different from the dispersion medium used in a pre-dispersion, and the solvent may preferably be N-methylpyrrolidone (NMP).

After the conductive agent dispersion and the negative electrode active material dispersion are mixed, the binder may be added to the mixture thereof.

A solid content in the negative electrode slurry composition may be in a range of 20 wt% to 80 wt%, specifically, 30 wt% to 60 wt%.

Next, the negative electrode slurry composition prepared as described above is dried to form a negative electrode active material layer. Specifically, the negative electrode active material layer may be prepared by a method of coating the negative electrode slurry composition on an electrode collector and drying the coated electrode collector, or may be prepared by a method of casting the negative electrode slurry composition on a separate support and then laminating a film separated from the support on the negative electrode collector. If necessary, the negative electrode active material layer is formed by the above-described method, and a rolling process may then be further performed. In this case, the drying and the rolling may be performed under appropriate conditions in consideration of physical properties of the electrode to be finally prepared, and are not particularly limited.

### Secondary Battery

Next, a secondary battery according to another embodiment of the present invention will be described.

The secondary battery according to another embodiment of the present invention may include the negative electrode of the above-described embodiment.

Specifically, the secondary battery may include the negative electrode, a positive electrode, a separator disposed between the positive electrode and the negative electrode, and an electrolyte, wherein the negative electrode is the same as the negative electrode of the above-described embodiment. Since the negative electrode has been described above, detailed descriptions thereof will be omitted.

The positive electrode may include a positive electrode collector and a positive electrode active material layer which is formed on the positive electrode collector and includes a positive electrode active material.

In the positive electrode, the positive electrode collector is not particularly limited as long as it has conductivity without causing adverse chemical changes in the batteries, and, for example, stainless steel, aluminum, nickel, titanium, fired carbon, or aluminum or stainless steel that is surface-treated with one of carbon, nickel, titanium, or silver may be used. Also, the positive electrode collector may typically have a thickness of 3 um to 500 um and may have a surface with fine roughness to improve adhesion to the positive electrode active material. The positive electrode collector may be used in various shapes, for example, a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of lithium (Li) being substituted with alkaline earth metal ions, but the positive electrode active material is not limited thereto. The positive electrode may be Li-metal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the positive electrode conductive agent may be graphite such as natural graphite and artificial graphite; a carbon-based material such as carbon black, acetylene black, Ketjen black, channel black, furnace black, lamp black, thermal black, and carbon fibers; metal powder, such as copper powder, nickel powder, aluminum powder, and silver powder, or metal fibers; conductive whiskers such as zinc oxide whiskers and potassium titanate whiskers; conductive metal oxide such as titanium oxide; or conductive polymers such as polyphenylene derivatives, and one alone or a mixture of two or more thereof may be used.

Also, the positive electrode binder functions to improve binding between positive electrode active material particles and adhesion between the positive electrode active material and the positive electrode collector. Specific examples of the positive electrode binder may be polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrenebutadiene rubber (SBR), a fluoro rubber, or various copolymers thereof, and one alone or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, at least one selected from the group consisting of F-, Cl⁻, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N- may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

### Embodiments for carrying out the invention

Hereinafter, the present invention will be described in more detail, according to specific examples.

### Example 1: Preparation of Negative Electrode

### (1) Preparation of Conductive Agent Dispersion

0.8 part by weight of bundle type carbon nanotubes (specific surface area was 650 m²/g) composed of single-walled carbon nanotube units having an average diameter of 1.5 nm, an average length of 5 µm, and an I_{G}/I_{D} value of 143 during Raman spectrum measurement and 1.2 parts by weight of a dispersant were mixed in 98 parts by weight of N-methylpyrrolidone (NMP), as a dispersion medium, to prepare a mixed solution so that a solid content was 2.0 wt%. After the mixed solution was put into a high-pressure homogenizer, a pressure of 1,500 Bar was applied to the mixed solution and the mixed solution was sequentially passed through a primary nozzle having a diameter of 200 mm and a secondary nozzle having a diameter of 500 um a total of 5 times.

As the dispersant, polyvinylpyrrolidone and tannic acid were mixed in a weight ratio of 3:1 and used.

### (2) Preparation of Negative Electrode Active Material Dispersion

Si particles having an average particle diameter (D₅₀) of 5 um and carboxymethyl cellulose (an amount corresponding to half of an amount of carboxymethyl cellulose included in a final negative electrode slurry) were added to NMP, as a solvent, and stirred to prepare a negative electrode active material dispersion. In the dispersion, the Si particles were included in an amount of 80 parts by weight based on 100 parts by weight of the NMP, and the carboxymethyl cellulose was included in an amount of 3 parts by weight.

### (3) Preparation of Negative Electrode Slurry Composition

After the conductive agent dispersion and the negative electrode active material dispersion were mixed, carboxymethyl cellulose, a styrene butadiene rubber, and a solvent (water) were added and stirred to prepare a negative electrode slurry composition.

### (4) Preparation of Negative Electrode

The negative electrode slurry composition was coated on a 20 um thick copper (Cu) metal thin film, as a negative electrode collector, at a loading of 300 mg/25 cm², and dried. In this case, a temperature of circulating air was 70°C. Subsequently, the negative electrode collector, on which the negative electrode slurry composition was coated and dried, was roll-pressed and dried in a vacuum oven at 130°C for 8 hours to prepare a negative electrode including a negative electrode active material layer. A weight ratio of the negative electrode active material, the carbon nanotube structure, the binder, and the dispersant in the negative electrode active material layer was 90:0.5:9:0.5. A weight ratio of the SBR to the CMC was 60:40.

### Example 2: Preparation of Negative Electrode

A negative electrode was prepared in the same manner as in Example 1 except that, during preparation of a conductive agent dispersion, bundle type carbon nanotubes composed of single-walled carbon nanotube units having an average diameter of 1.5 nm, an average length of 5 µm, and an I_{G}/I_{D} value of 100 during Raman spectrum measurement were used instead of the bundle type carbon nanotubes used in Example 1.

### Comparative Example 1: Preparation of Negative Electrode

A negative electrode was prepared in the same manner as in Example 1 except that, during preparation of a conductive agent dispersion, bundle type carbon nanotubes composed of single-walled carbon nanotube units having an average diameter of 1.5 nm, an average length of 5 µm, and an I_{G}/I_{D} value of 190 during Raman spectrum measurement were used instead of the bundle type carbon nanotubes used in Example 1.

### Comparative Example 2: Preparation of Negative Electrode

A negative electrode was prepared in the same manner as in Example 1 except that, during preparation of a conductive agent dispersion, bundle type carbon nanotubes composed of single-walled carbon nanotube units having an average diameter of 1.5 nm, an average length of 5 µm, and an I_{G}/I_{D} value of 25 during Raman spectrum measurement were used instead of the bundle type carbon nanotubes used in Example 1.

### Comparative Example 3: Preparation of Negative Electrode

A negative electrode was prepared in the same manner as in Example 1 except that, during preparation of a conductive agent dispersion, the pressure of the high-pressure homogenizer was changed to 2,000 Bar instead of 1,500 Bar.

### Comparative Example 4: Preparation of Negative Electrode

A negative electrode was prepared in the same manner as in Example 1 except that, during preparation of a conductive agent dispersion, the pressure of the high-pressure homogenizer was changed to 300 Bar instead of 1,500 Bar.

### Comparative Example 5: Preparation of Negative Electrode

A negative electrode was prepared in the same manner as in Example 1 except that, during preparation of a conductive agent dispersion, the number of times of use of the high-pressure homogenizer was changed from 5 times to 13 times.

### Comparative Example 6: Preparation of Negative Electrode

A negative electrode was prepared in the same manner as in Example 1 except that, during preparation of a conductive agent dispersion, the number of times of use of the high-pressure homogenizer was changed from 5 times to 1 time.

### Comparative Example 7: Preparation of Negative Electrode

A negative electrode was prepared in the same manner as in Example 1 except that, during preparation of a negative electrode slurry composition, a negative electrode active material in a powder form was mixed with the conductive agent dispersion without preparing a negative electrode active material dispersion.

### Experimental Example 1

A surface of the negative electrode active material layer of each of the negative electrodes prepared in Examples 1 and 2 and Comparative Examples 1 to 7 was observed with a scanning electron microscope to measure an average A value. Specifically, after an SEM image was obtained by measuring the surface of the negative electrode active material layer of each negative electrode at a magnification of 20,000 through the scanning electron microscope (SEM), 60 carbon nanotube structures having an average length of 2 um to 20 um were selected by using the obtained SEM image. Then, straight-line distance (P) and total length (Q) between both ends of each of the selected carbon nanotube structures were obtained through SEM image analysis, and substituted into Equation 1 to measure an A value. Then, the average A value was calculated by arithmetic average of remaining 50 A values excluding top 5 values and bottom 5 values from the measured A values. Measurement results are presented in [Table 1] below.

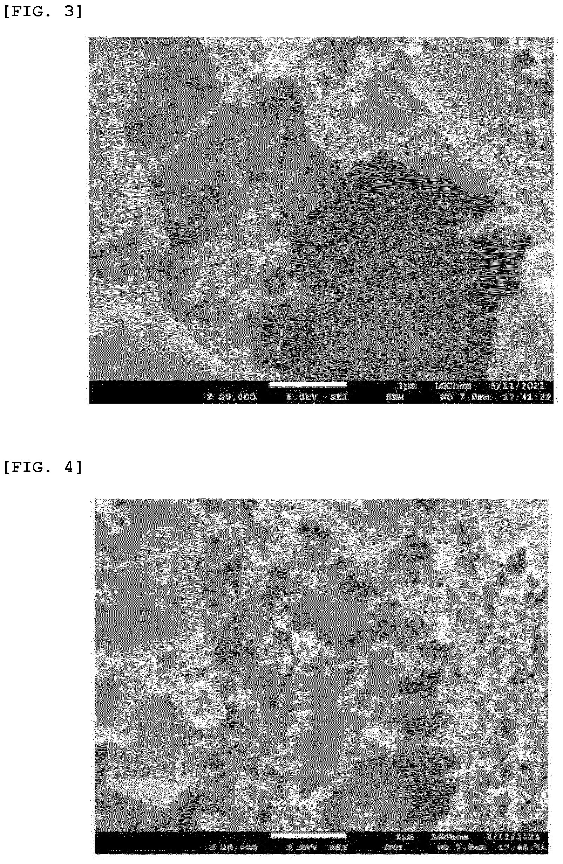

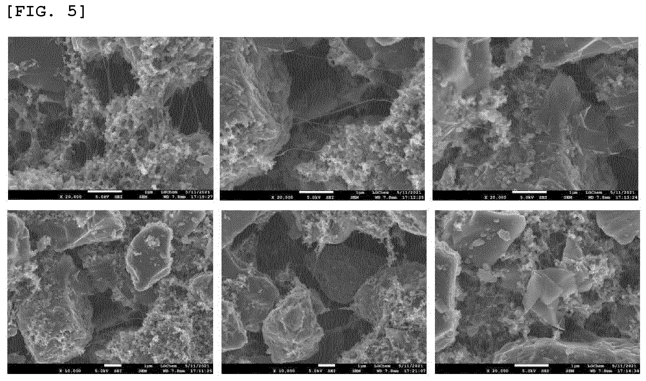

Also, SEM images obtained by observing the surface of the negative electrode active material layer of Example 1 with a scanning electron microscope are illustrated in FIGS. 2 through 5.

### Experimental Example 2: Negative Electrode Adhesion Evaluation

After the negative electrode punched out to a width of 20 mm and a length of 15 cm was attached to a slide glass through a double-sided tape, the negative electrode was pressed with a constant pressure. Then, a 90° peel test was performed to measure negative electrode adhesion (unit: gf/20mm), and the results thereof are presented in Table 1.

### Experimental Example 3: Capacity Retention Evaluation

Batteries were respectively prepared as follows by using the negative electrodes of the examples and the comparative examples.

Li[Ni_{0.6}Mn_{0.2}Co_{0.2}]O₂ was used as a positive electrode active material. The positive electrode active material, carbon black as a conductive agent, and polyvinylidene fluoride (PVdF), as a binder, were mixed in a weight ratio of 94:4:2 in an N-methyl-2-pyrrolidone solvent to prepare a positive electrode slurry.

The positive electrode slurry prepared was coated on a 15 um thick aluminum metal thin film, as a positive electrode collector, and dried. In this case, a temperature of circulating air was 110°C. Subsequently, the coated and dried positive electrode collector was roll-pressed and dried in a vacuum oven at 130°C for 2 hours to form a positive electrode active material layer.

Each of the negative electrodes of the examples and the comparative examples, the above-prepared positive electrode, and a porous polyethylene separator were assembled by using a stacking method, and an electrolyte solution (ethylene carbonate (EC)/ethyl methyl carbonate (EMC)=1/2 (volume ratio), lithium hexafluorophosphate (LiPF₆ 1 mol)) was injected into the assembled battery to prepare a lithium secondary battery.

Charge and discharge of each of the lithium secondary batteries were performed under the following conditions.

Charging conditions: charged at a constant current of 0.5 C to 4.25 V and then charged at a constant voltage of 4.2 V until a current rate was 0.1 C

Discharging conditions: constant-current discharged at a current rate of 0.5 C to 2.8 V

When the above charging and discharging were set as one cycle, 200 cycles were performed at 45°C. Thereafter, a discharge capacity retention after 200 cycles relative to discharge capacity (100%) after 1 cycle was measured and presented in Table 1.

**[Table 1]**

| | Carbon nanotube structure | | SWCNT unit | High-pressure homogenizer | | Avera ge A | Adhes ion (gf/2 0mm) | Capac ity reten tion (%) |
|---|---|---|---|---|---|---|---|---|
| | Averag e diamet er (nm) | Averag e length (µm) | I_{G}/I_{D} | Press ure (Bar) | The numbe r of times of use | | | |
| Example 1 | 25 | 7 | 143 | 1500 | 5 | 93 | 85 | 85 |
| Example 2 | 30 | 10 | 100 | 1500 | 5 | 89 | 80 | 82 |
| Comparative Example 1 | 70 | 25 | 190 | 1500 | 5 | 62 | 55 | 70 |
| Comparative Example 2 | 10 | 2 | 25 | 1500 | 5 | 54 | 53 | 62 |
| Comparative Example 3 | 9 | 1.5 | 143 | 2000 | 5 | 56 | 50 | 58 |
| Comparative Example 4 | 90 | 30 | 143 | 300 | 5 | 61 | 60 | 65 |
| Comparative Example 5 | 10 | 1.7 | 143 | 1500 | 13 | 65 | 51 | 56 |
| Comparative Example 6 | 120 | 40 | 143 | 1500 | 0 | 58 | 53 | 60 |
| Comparative Example 7 | 50 | 20 | 143 | 1500 | 5 | 68 | 65 | 75 |

According to [Table 1], it may be confirmed that the negative electrodes of Examples 1 and 2 having an average A value of 70 to 100 had better electrode adhesion than the negative electrodes of Comparative Examples 1 to 7 having an average A value of less than 70, and exhibited better life characteristics when used in the battery.

## Claims

1. A negative electrode comprising a negative electrode active material layer that includes a negative electrode active material and a conductive agent,
wherein the negative electrode active material comprises a silicon-based negative electrode active material, and
the conductive agent comprises a carbon nanotube structure in which a plurality of single-walled carbon nanotube units are bonded to each other side by side,
wherein the carbon nanotube structure has an average length of 2 µm to 20 µm, and
after 60 carbon nanotube structures are selected from carbon nanotube structures having an average length of 2 um to 20 um which are observed when a surface of the negative electrode active material layer is checked at a magnification of 20,000 through a scanning electron microscope (SEM) and an A value defined by [Equation 1] is measured for each of the selected carbon nanotube structures, an average A value, which is calculated by arithmetic average of remaining 50 A values excluding top 5 A values and bottom 5 A values from the measured A values, is in a range of 70 to 100: A = (straight-line distance (P) between both ends of the carbon nanotube structure/total length (Q) of the carbon nanotube structure) × 100.

2. The negative electrode of claim 1, wherein the average A value is in a range of 90 to 100.

3. The negative electrode of claim 1, wherein the silicon-based negative electrode active material has an average particle diameter D₅₀ of 1 µm to 15 µm.

4. The negative electrode of claim 1, wherein the carbon nanotube structure has an average diameter of 10 nm to 100 nm.

5. The negative electrode of claim 1, wherein the carbon nanotube structure has an average diameter of 15 nm to 28 nm.

6. The negative electrode of claim 1, wherein the carbon nanotube structure is included in an amount of 0.01 wt% to 5 wt% in the negative electrode active material layer.

7. The negative electrode of claim 1, wherein the single-walled carbon nanotube unit has an I_{G}/I_{D}, which is measured by Raman spectrum, of 30 to 200.

8. The negative electrode of claim 1, wherein the negative electrode active material layer further comprises a dispersant,
wherein the dispersant comprises a polymer dispersant containing an amine and a phenolic compound containing two or more aromatic rings.

9. The negative electrode of claim 8, wherein the polymer dispersant containing an amine and the phenolic compound containing two or more aromatic rings are included in a weight ratio of 5:1 to 1:1.

10. A secondary battery comprising the negative electrode of any one of claims 1 to 9.
